# EUROPEAN PATENT APPLICATION

(11) **EP 3 889 837 A1**
(43) Date of publication of application: **06.10.2021**
(21) Application number: 20315094.1
(22) Date of filing: 01.04.2020
(51) Int. Cl.: G06K 19/02, G06K 19/077

(54) **RADIO FREQUENCY SMART CARD AND METHOD FOR FABRICATING THE SAME**

(71) Applicant: THALES DIS FRANCE SA, 92190 Meudon (FR)
(72) Inventor: Choo, Yeow Chun Ricky, 13881 Gemenos Cedex (FR); Bajolle, Antoine, 13881 Gemenos Cedex (FR); Braithwaite, Gregory, 13881 Gemenos Cedex (FR)
(74) Representative: Grevin, Emmanuel

(57) **Abstract**

A radio frequency smart card comprising a metal plate forming a loop around a housing for receiving an antenna substrate. A slit extends from the housing to a periphery of the plate through the loop. An end of the slit located at said periphery has a cross-sectional area reduced by at least 20% of the average cross-sectional area of the slit.

## Description

### (Field of the invention)

The present invention relates to the field of radio frequency smart cards, and more particularly of contactless cards comprising a metal plate.

### (Background of the invention)

Smart cards using one or several integrated circuit (IC) chips may have features to communicate in contact mode, in contactless mode or both. Contactless smart cards have a radio-frequency (RF) component to communicate through their contactless communication interface. For example they may be designed to communicate in RFID or near-field communication (NFC) for exchanging data with a compatible reader. It is known to use such contactless cards in several domains like payment, building access or transport for instance.

Contactless cards generally have a body that comprise plastic materials such as PVC (polyvinyl chloride). In recent years, a need has emerged to offer cards comprising a metal part aiming at adding weight to the card. The metal may also be used to propose cards having a feel and look more attractive for end users.

Unfortunately, when metal layers are incorporated into contactless smart cards, the attenuation of RF/NFC signals due to the presence of the metal part(s) is an important concern. Most of the time, the contactless communication is difficult or even not possible with a contactless reader. When the transponder of the card is surrounded by metal, a Faraday shield is formed that blocks electromagnetic field and thus contactless communication.

It is known to add a slit through a part of a metal layer to overcome this problem as described in US2016/0110639 A1.

However, due to the slit, an opening on the edge of the metal layer is clearly seen as a defect on the edge of the card when the metal extends to the edge of the card body. Moreover, when inserted into flat card bodies, the incorporation of a slit may have a negative impact to the structural properties of card bodies.

Manufacturing a smaller slit may be contemplate, but this implies a significant change in the manufacturing process and negative impacts in terms of costs and processing time.

Consequently, there is a need for a method allowing to enhance the way to manufacture cards having a slit in a metal layer.

### (Summary of the Invention)

The invention aims at solving the above mentioned technical problem.

An object of the present invention is a radio frequency smart card comprising a metal plate forming a loop around a housing for receiving an antenna substrate. A slit extends from the housing to a periphery of the plate through the loop. An end of the slit located at said periphery has a cross-sectional area reduced by at least 20% of the average cross-sectional area of the slit.

Advantageously, the width of the end of the slit located at said periphery (i.e. on the outer side) may be comprised between 0.05 millimeter and 0,40 millimeter.

Advantageously, a portion of the slit extending lengthwise of the slit and adjoining said periphery may have an average width reduced compared to the average width of the slit.

Advantageously, the width of the slit may gradually decrease in said portion.

Advantageously, the portion may have a length equal to or greater than 1 millimeter.

Advantageously, the portion may remain empty.

Advantageously, the portion may be curved.

Advantageously, the portion may have two straight longitudinal edges which face each other without being substantially parallel.

Advantageously, the smart card may be a banking card.

Another object of the present invention is a method for fabricating a radio frequency smart card comprising a metal plate forming a loop around a housing for receiving an antenna substrate. The method comprises the step of applying an electro-erosion to create a slit extending from the housing to a periphery of the plate through the loop, said slit having an end located at said periphery which has a cross-sectional area reduced by at least 20% of the average cross-sectional area of the slit.

Advantageously, a portion of the slit extending lengthwise of the slit and adjoining said periphery may have a width reduced compared to the average width of the slit.

Advantageously, a second plate or layer may be disposed on the metal plate and a lamination of said second plate (or layer) may fill at least partially said portion with a material originated from the second plate.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a top plan view of metal plate according to an example of the invention;
- Figure 2 depicts schematically an enlarged top plan view of the slit according to an example of the invention.
- Figure 3 depicts schematically a cross-sectional view along the line A-A' in Figure 1;
- Figures 4A-4C depict schematically a cross-sectional view along the line B-B' in Figure 1 at different steps of manufacturing process; and
- Figure 5 and 6 depict schematically a top plan view of the slit according to other examples of the invention.

### (Detailed description of the preferred embodiments)

In the description detailed below, reference is made to the accompanying drawings that show, by way of illustration, specific embodiments in which the invention may be practiced. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims.

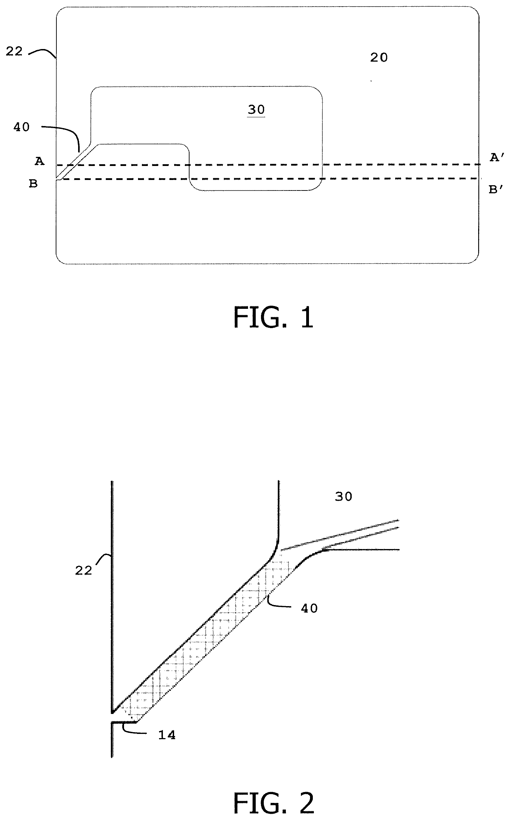

Figure 1 is a top plan view of a metal plate according to an exemplary embodiment of the invention.

The metal plate 20 is intended to be inserted as a layer into a card body.

The metal plate 20 forms a loop around a housing 30 for receiving an antenna substrate. The housing 30 may also receive a transponder. A slit 40 extends from the housing to a periphery 22 of the plate through the loop. In other words, the slit has a first end located at the edge 22 of the metal plate and a second end located at the housing 30. In the example of Figure 1, the slit is generally straight and generally follows an axis forming an acute angle with respect to the edge 22 of the metal plate 20.

The metal plate 20 may be made of stainless steel. Alternatively it may be made of aluminum, titanium or gold for example. Advantageously, the metal plate 20 may be made of tungsten which provides significant weight with a rather low cost.

Figure 2 is an enlarged top plan view of the slit of Figure 1.

A portion 14 of the slit 40 extends lengthwise of the slit and adjoins the periphery (edge) 22 of the metal plate 20. The end of the slit located at the edge 22 has a cross-sectional area which is reduced by at least 20% of the average cross-sectional area of the slit.

The portion 14 has a width reduced compared to the average width of the slit 40.

For instance, the portion 14 may have an average width comprised between 0.05 millimeter and 0.40 millimeter while the average width of the slit may be between 0,1 millimeter and 1 millimeter.

As shown at Figure 2, the width of the slit may gradually decrease in the portion 14 while the width of the slit remains substantially constant in the rest of the slit 40.

The rest of the slit may be filled with a nonconductive element (as shown by the hatched area of Figure 2) whose shape has been cut to fit into the available space. Such an element may be called insert and may be made of PVC or resin for instance.

The portion 14 may remain empty. By selecting an appropriate adhesive, the portion may be left unfilled.

For example, the selected adhesive may be a thermosetting adhesive that is used in the FPC (Flexible Printed Circuit) industry.

The adhesive may be arranged so that covers the top and bottom of the metal and antenna substrate.

In a preferred embodiment, the portion 14 may be at least partly filled by a material coming from an adjacent layer (not shown at Fig. 2) by applying a lamination operation. For example, the metal plate may be hot-rolled with a hot-melt and/or thermosetting adhesive making the plate adhere to the adjacent layer.

Thus the portion may be partly (or completely) filled with PVC or an adhesive for example.

The edge of the card body (including the metal plate 20) can be mechanically polished to remove any burrs or sagging after lamination (or laminating operation).

The size and shape of the portion may vary from an embodiment to another. Preferably, the portion 14 has a length equal to or greater than 1 millimeter in order to be compatible with the geometry limitation of die punch process. It is to be noted the total length of the slit is preferably comprised in the range 10,0 to 12,5 millimeters. The total length of the slit may be around 7,1 millimeters when the axis of the slit is approximately perpendicular to the edge of the metal plate.

Preferably, the portion 14 may have two straight longitudinal edges which face each other without being substantially parallel. For instance one edge of the portion may be parallel to the edge of the rest of the slit while the facing edge of the portion may be straight and form an angle of about 45 degrees with the rest of the slit.

In one embodiment, the entire slit (including the portion) may be filled with a unique insert made of nonconductive material like PVC. In other words, the insert may extends from the housing to the edge of the metal plate.

Surprisingly, the slit enhanced according to the invention has good RF/NFC properties which are similar to the RF/NFC properties of a conventional slit (i.e. a slit with a constant cross-sectional area.)

In addition, the part of the metal plate 20 surrounding the portion 14 is more robust than in the case of an ordinary slit and provides better resistance to bends and pressures that can be applied to the card body in which the metal plate 20 is inserted.

The invention allows to have a residual opening on the edge of the metal plate 20 which can be barely perceptible to the eye, or even imperceptible depending on the dimensions chosen for the portion 14. This provides an important advantage for smart cards incorporating a metal plate that extends to the edge of the card body since edge of the card body appears to be uniform.

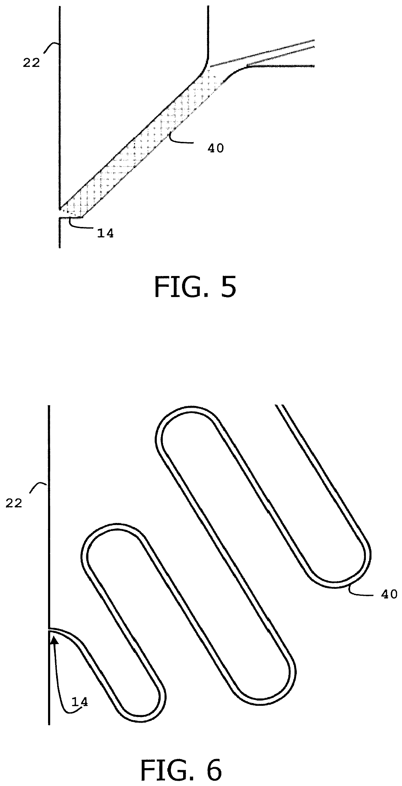

Figure 5 is an enlarged top plan view of a slit according to another embodiment of the invention.

This embodiment is similar to the one of Figure 2 with the following difference: the shape of the insert placed in the slit. In the embodiment of Figure 5, the insert is disposed in the slit and fills a part of the portion 14 while in the example of Figure 2 the insert is arranged in the main part of the slit 40 without entering the portion 14.

Figure 6 is an enlarged top plan view of a slit according to another embodiment of the invention.

In this embodiment, the shape of the slit 40 has several curves. The slit leads to the edge 22 of the metal plate 20 almost perpendicular to this edge. The end of the portion 14 (located at the edge 22) has a cross-sectional area reduced by at least 20% of the average cross-sectional area of the slit 40.

Another aspect of the invention is a method for fabricating a radio frequency smart card which comprises a metal plate with a slit.

By reference to the metal plate of Figure 1, the method comprises a step of applying an electro erosion to the metal plate in order to create a slit 40 that extends from the housing 30 to the periphery 22 of the metal plate 20 through the loop around the housing 30. The slit 40 is cut to create an end (located at the edge 22) which has a cross-sectional area reduced by at least 20% of the average cross-sectional area of the slit.

The electro-erosion technology is also known as Electrical discharge machining (EDM).

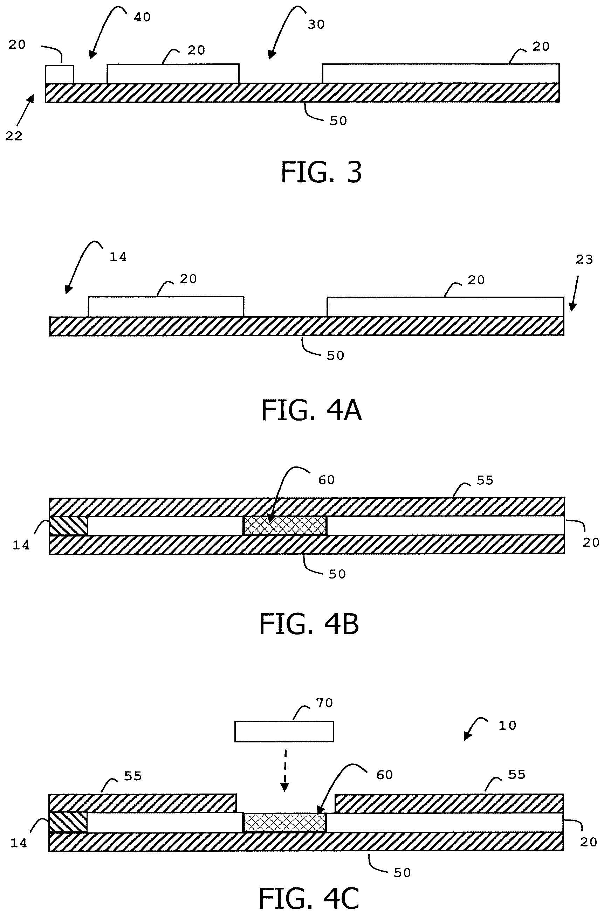

Figure 3 depicts schematically a cross-sectional view along the line A-A' in Figure 1.

The metal plate 20 appears in the form of three metal parts. On the left side, a short part extends from the edge 22 of the metal plate to the slit 40. The second metal part extends from the slit 40 to the housing 30 intended to receive an antenna. The third metal part extends from the housing to the other edge of the metal plate.

In the example of Figure 3, the metal plate is arranged on a second layer 50 which may be made of PVC for instance.

Figure 4A-4C depict schematically a cross-sectional view along the line B-B' in Figure 1 for several steps of the manufacturing process.

Figure 4A corresponds to the same manufacturing step as Figure 3.

On the left side, the portion 14 of the slit extends to the edge 22 of the metal plate. The metal plate 20 appears in the form of two parts. The first metal part extends from the portion 14 to the housing 30. The second metal part extends from the housing to the opposite edge 23 of the metal plate.

At this stage, the metal plate is arranged on a second layer 50 (or plate).

Figure 4B corresponds to a manufacturing step subsequent to the one of Figure 4A.

At this stage, an antenna 60 (or an antenna substrate) has been placed in the housing 30. A transponder connected to the antenna may also be placed in the housing.

A third plate 55 has been placed on the metal plate 20 on the side opposite the second plate 50. The third plate 55 may be formed of PVC. A lamination has been applied to the three layers device resulting in filling the portion 14 with material (PVC in this case) originated from at least one of the layers 50 and 55.

It is to be noted that the lamination process can be performed with a range of temperatures which avoid metal impression marks due to the softening of encapsulating PVC layers.

Figure 4C corresponds to a manufacturing step subsequent to the one of Figure 4B.

Starting from the state shown at Figure 4B, a hole or recess is drilled in the layer 55 to create a cavity. Then a module 70 (e.g. external interface for communication in contact mode) can be added and connected to the transponder or other electronic components like a smart card chip. The layers thus assembled are used to constitute the body of a smart card 10.

For the sake of brevity and not to overload the drawings, certain elements generally included in the body of the smart card 10 do not appear on the Figure 3, 4A, 4B and 4C. For instance the card body may comprise another antenna, a chip, a MCU, a battery, a display, or protective layers arranged on either sides of the card body.

Although the examples describes previously relate to a single metal plate, the invention may apply to card body comprising two or more metal plates.

An advantage of an embodiment of the invention is to be compatible with legacy manufacturing processes based on die punch (or cutting plotter) to create the insert (of nonconductive material) due to the shape of the main part of the slit (i.e. the slit excluding its narrowed end portion) that may have a width compatible with die punch/cutting plotter limitations. In addition, the invention allows to tackle the edge visibility by tweaking the terminal end of the slit to minimize (or even remove) the slit visibility on the final product.

The invention allows to increase the amount of metal near the edge of the metal plate. Since the metal is more rigid than the vacuum and materials usually used to form the insert, the invention allows to reinforce the robustness of the metal plate (and thus the robustness of the card body including the metal plate) on its periphery.

It must be understood, within the scope of the invention, that the above-described embodiments are provided as non-limitative examples.

The invention is not limited to the described embodiments or examples. In particular, the features described in the presented embodiments and examples may be combined.

The shapes of the slit 40 shown at Figures 2, 5 and 6 are provided as examples only. They shows a slit that runs straight down at an angle. The invention also apply to slits having different shapes and to slits with a different orientation or having an opening at the metal plate edge with a right angle.

## Claims

1. A radio frequency smart card comprising a metal plate (20) forming a loop around a housing (30) for receiving an antenna substrate, a slit (40) extending from the housing to a periphery (22) of the plate through the loop,
**characterized in that** an end of the slit located at said periphery (22) has a cross-sectional area reduced by at least 20% of the average cross-sectional area of the slit.

2. The smart card according to claim 1, wherein the width of the end of the slit located at said periphery is comprised between 0.05 millimeter and 0,40 millimeter.

3. The smart card according to claim 1, wherein a portion (14) of the slit extending lengthwise of the slit and adjoining said periphery has a width reduced compared to the average width of the slit.

4. The smart card according to claim 3, wherein the width of the slit gradually decreases in said portion (14).

5. The smart card according to claim 3, wherein said portion (14) has a length equal to or greater than 1 millimeter.

6. The smart card according to claim 3, wherein said portion (14) remains empty.

7. The smart card according to claim 3, wherein said portion (14) is curved.

8. The smart card according to claim 3, wherein said portion (14) has two straight longitudinal edges which face each other without being substantially parallel.

9. The smart card according to claim 3, wherein the smart card is a banking card.

10. A method for fabricating a radio frequency smart card comprising a metal plate (20) forming a loop around a housing (30) for receiving an antenna substrate,
**characterized in that** the method comprises the step of applying a electro-erosion to create a slit (40) extending from the housing to a periphery (22) of the plate through the loop, said slit having an end located at said periphery (22) which has a cross-sectional area reduced by at least 20% of the average cross-sectional area of the slit.

11. The method according to claim 10, wherein a portion (14) of the slit extending lengthwise of the slit and adjoining said periphery has a width reduced compared to the average width of the slit.

12. The method according to claim 11, wherein a second plate (50) is disposed on the metal plate (20) and wherein a lamination of said second plate (50) fills at least partially said portion (14) with a material originated from the second plate (50).
